# EUROPEAN PATENT SPECIFICATION

(11) **EP 4 465 542 B1**
(45) Date of publication and mention of the grant of the patent: **11.02.2026**
(21) Application number: 24176299.6
(22) Date of filing: 16.05.2024
(51) Int. Cl.: H04B 1/3888, H04W 4/10

(54) **PROTECTIVE FRAME FOR A CELLULAR PHONE WITH A PUSH-TO-TALK FUNCTIONALITY AND THE USE OF SUCH A FRAME**
SCHUTZRAHMEN FÜR EIN MOBILTELEFON MIT PUSH-TO-TALK-FUNKTIONALITÄT UND VERWENDUNG EINES SOLCHEN RAHMENS
CADRE DE PROTECTION POUR UN TÉLÉPHONE CELLULAIRE AVEC UNE FONCTIONNALITÉ DE MESSAGERIE VOCALE INSTANTANÉE ET UTILISATION D'UN TEL CADRE

(30) Priority: 16.05.2023 FI 20235555
(43) Date of publication of application: 20.11.2024
(73) Proprietor: Fanttiset Oy, 40520 Jyväskylä (FI)
(72) Inventor: HAUTALA, Pasi, 40530 JYVÄSKYLÄ (FI)
(74) Representative: Berggren Oy

(56) References cited:
- US-B1- 10 651 880
- KLEIN ELECTRONICS ET AL: "Blackbox Pocket+ Two-Way Radio Silicone Grip Case!", 8 January 2021 (2021-01-08), XP093195795, Retrieved from the Internet <URL:https://www.youtube.com/watch?v=h_6Fyb5-7DI&ab_channel=KleinElectronics,Inc.> [retrieved on 20240905]

## Description

### Technical field of the invention

The invention concerns a protective frame for a cellular phone with a push-to-talk functionality, as defined in the preamble of claim 1. The invention also concerns the use of such a frame, as defined in another independent claim.

### Background of the invention

Reliable communication systems are important for the operation of different public authorities, such as the police, fire and rescue service, border guards and the customs. A large part of the communication in the field takes place via half-duplex radio systems. In a half-duplex system, communication in two directions is possible, but only one party at a time can transmit.

Conventionally, walkie-talkies specifically designed for half-duplex communication have been used by the public authorities and other users. However, walkie-talkies have been replaced in many uses by cellular phones that are adapted to Push-to-Talk over Cellular (PoC). In a PoC system, the users of the system can connect to others via a telecommunication network. In Finland, the public authorities can use a dedicated telecommunication network called VIRVE. However, similar operation is possible also in commercial telecommunication networks.

When communicating in a PoC system, customary smart phones can be used. The phone needs to have an application allowing the phone to be used in a PoC system. The phone also needs to have a functionality allowing the operation mode of the phone to be switched from reception to transmission when used in a PoC system. Many smart phones have physical push-buttons that can be programmed to be used as push-to-talk buttons switching the phone to a transmission mode.

Public authorities need to be able to operate in various conditions. A problem relating to the use of customary smart phones in PoC systems is that the physical push-buttons have not been designed to be used with thick gloves that are needed in cold conditions or as part of protective gear. As a result, the use of the push-buttons is difficult. For instance, the user of the phone may fail in pushing a push-button or may accidentally push a wrong push-button, or a push-button may get stuck. Similar problems may of course be encountered by other users of PoC systems.

Protective covers for walkie-talkies are sold, for instance, by Klein Electronics, Inc. as shown in an advertisement video that can be found in the following URL: https://www.youtube.com/watch?v=h 6Fyb5-7DI (retrieved 16 May 2025).

Document US 10651880 B1 shows another example of a protective cover for a portable radio.

### Summary of the invention

An object of the invention is to provide an improved protective frame for a cellular phone with a push-to-talk functionality. The protective frame according to the invention is configured for a cellular phone having a perimeter that is provided with a first push-button that can be used as a push-to-talk button. Another object of the invention is to provide a use of such a protective frame.

The protective frame according to the invention is made of an elastic material and has a perimeter configured to surround the perimeter of the phone. The perimeter of the frame is provided with a first push area, the first push area being configured to cover in a mounted state of the frame the first push-button of the phone and to allow use of said first push-button. The first push area is dimensioned to facilitate the use of said first push-button.

The protective frame with a push area dimensioned to facilitate the use of a push-to-talk button ensures reliable communication when an ordinary mobile phone is used in a PoC system.

According to the invention, the area of the first push area of the protective frame is larger than the area of the first push-button of the phone. With a large push area, the push-to-talk button can be easily used even when the user has thick gloves due to cold weather or as part of protective gear.

According to the invention, the length of the first push area is at least 50 percent greater than the length of the first push-button, and the width of the first push area is at least 20 percent greater than the width of the first push-button.

Especially a sufficient length facilitates the use of the push-to-talk button, but even an increased width makes the use of the push-button easier.

According to the invention, the frame is configured to increase the force needed for pushing the first push-button by at least 1 N. A sufficiently stiff push area reduces the risk of accidental pushing of the push-to-talk button.

According to an embodiment of the invention, the length of the first push area is at least 100 percent greater than the length of the first push-button, and/or the width of the first push area is at least 50 percent greater than the width of the first push-button.

According to an embodiment of the invention, the length of the first push area is at least 20 mm, preferably at least 30 mm. A long push area allows using two fingers to operate the push-to-talk button.

According to an embodiment of the invention, the first push area is raised by at least 1.5 mm, preferably by at least 2.0 mm, from the area surrounding said first push area. By making the push area to rise sufficiently from the surrounding part of the frame, the push-to-talk button is easier to use with gloves.

According to an embodiment of the invention, the frame is configured to increase the force needed for pushing the first push-button by at least 1.5 N.

According to an embodiment of the invention, the frame is configured for a phone comprising a second push button that can be used as an emergency call button, and the frame comprises a second push area that is configured to cover in the mounted state of the frame said second push-button and dimensioned to facilitate the use of said second push-button. Especially if the phone is used in a PoC system by public authorities, the phone may be required to have an emergency call button. Also the emergency call button needs to be easily and reliably usable even when the user wears gloves.

According to an embodiment of the invention, the area of the second push area is larger than the area of the second push-button of the phone and optionally, the length and/or width of the second push area is at least 20 percent, preferably at least 50 percent greater than the respective dimension of the second push-button. The large push area provides similar benefits as with the push-to-talk button. However, the second push area can be smaller than the first push area.

According to an embodiment of the invention, the frame is configured to increase the force needed for pushing the second push-button by at least 2 **N,** preferably by at least 3 N. A sufficiently stiff second push area reduces the risk of accidental pushing of the emergency call button. The second push area can be made stiffer than the first push area.

According to an embodiment of the invention, the second push area is raised by at least 1.5 mm, preferably by at least 2.0 mm, from the area surrounding said second push area. By making the push area to rise sufficiently from the surrounding part of the frame, the emergency call button is easier to use with gloves.

According to an embodiment of the invention, the frame is configured for a phone comprising a third push button facing an opposite direction than the first push-button, and the frame is configured to surround the third push-button such that the third push-button and an optional third push-area covering the third push-button is recessed relative to the area of the frame surrounding said third push-button and the optional third push area. When the phone is used as a push-to-talk device, the user typically keeps the phone in hand such that the push-to-talk button is pushed by one or two of the middlemost fingers and the opposite side of the phone is against the palm. By arranging the third push-button into a recessed area, accidental pushing of the third push-button can be avoided.

According to an embodiment of the invention, at least one of the push areas of the frame is connected to the area surrounding said push area from one side or from two opposite sides of said push area. By leaving some sides of the push area unconnected to the surrounding area of the frame, the push area can yield and allows easy pushing. The thickness and the length of the area connecting the push area to the surrounding area can be adjusted to provide the desired stiffness.

According to an embodiment of the invention, the frame comprises a protrusion protruding in the longitudinal direction of the frame outwards from the top surface of the frame to allow the frame to be secured to a casing by means of an attachment loop. This allows carrying the protective frame and the phone in a similar way as conventional walkie-talkies.

According to an embodiment of the invention, the frame is made of a plastic material, such as polyamide. Plastic materials, and in particular different polyamides, provide suitable elastic properties and durability for the protective frame.

According to the invention, the protective frame defined above is used with a cellular phone with a push-to-talk functionality.

### Brief description of the drawings

Embodiments of the invention are described in more detail below with reference to the accompanying drawings, in which
Fig. 1 shows a front view of a protective frame according to an embodiment of the invention,
Fig. 2 shows a bottom view of the protective frame of figure 1,
Fig. 3 shows a rear view of the protective frame of figure 1,
Fig. 4 shows a side view of the protective frame of figure 1,
Fig. 5 shows a perspective view of the protective frame of figure 1,
Fig. 6 shows another perspective view of the protective frame of figure 1, and
Fig. 7 shows an example of a cellular phone, together which the protective frame according to the invention can be used.

### Detailed description of embodiments of the invention

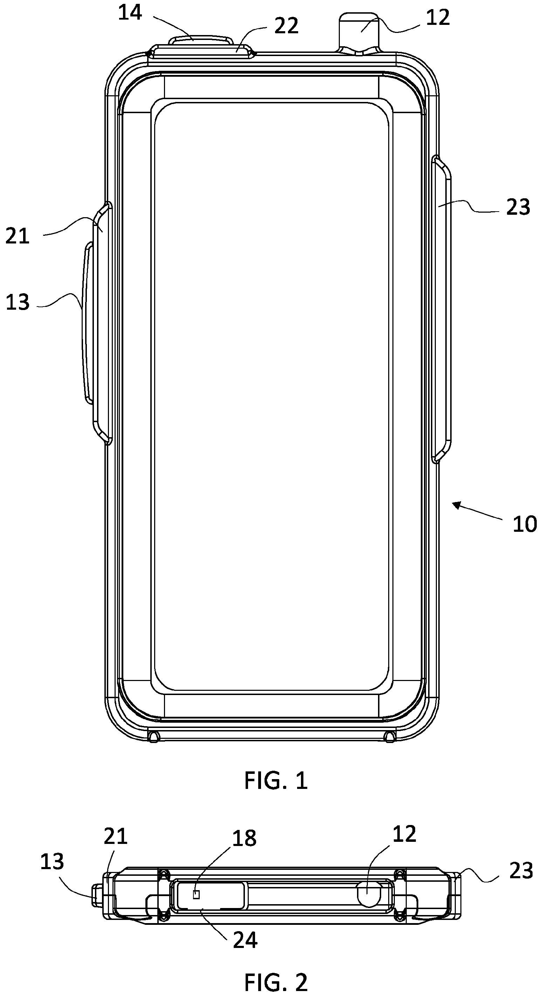

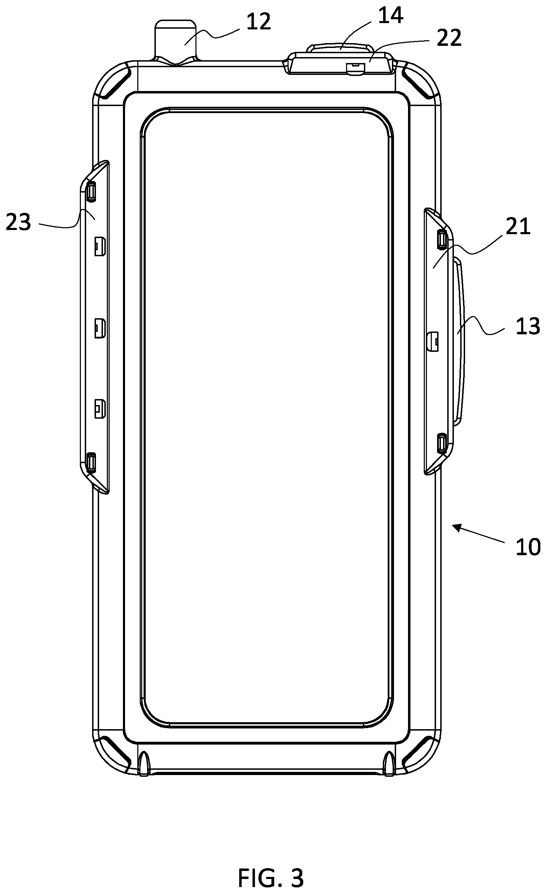

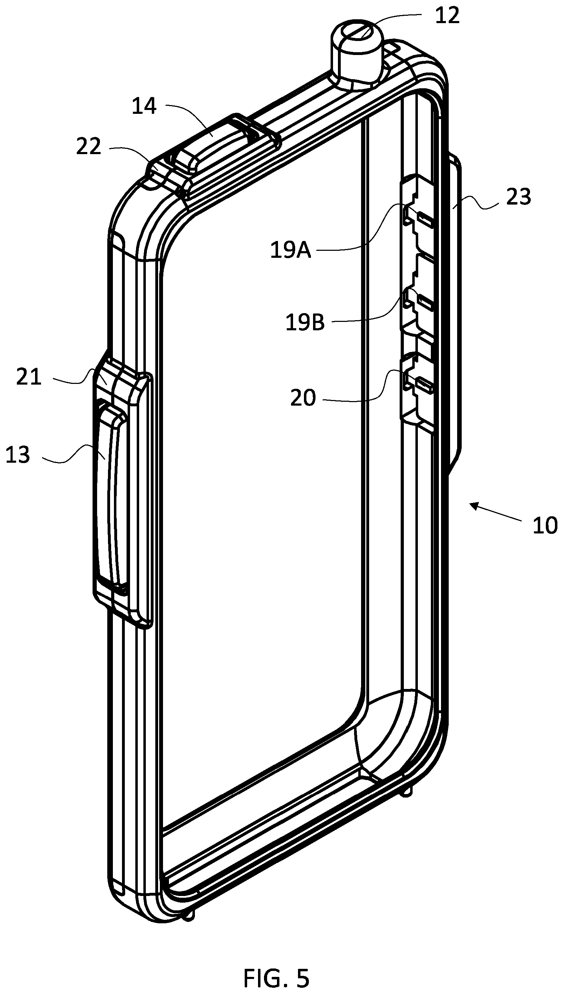

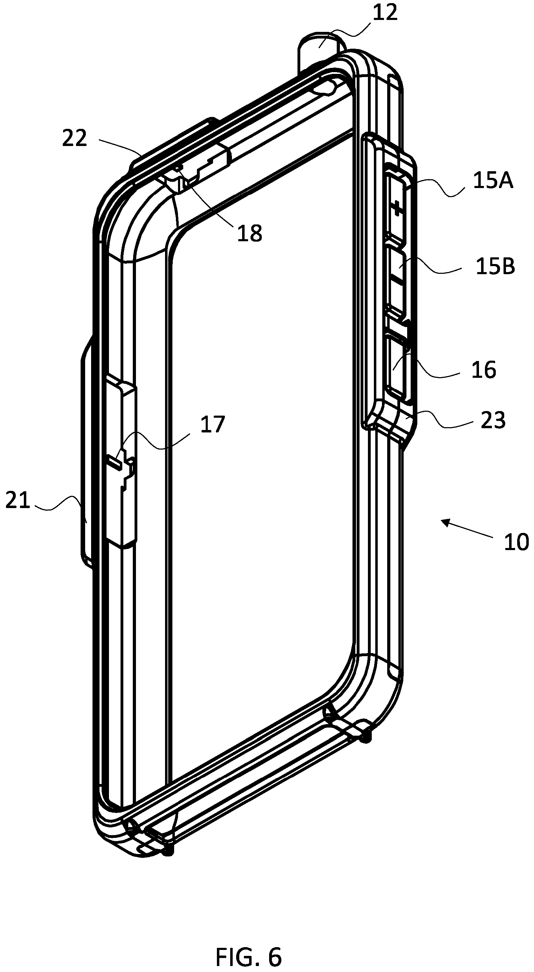

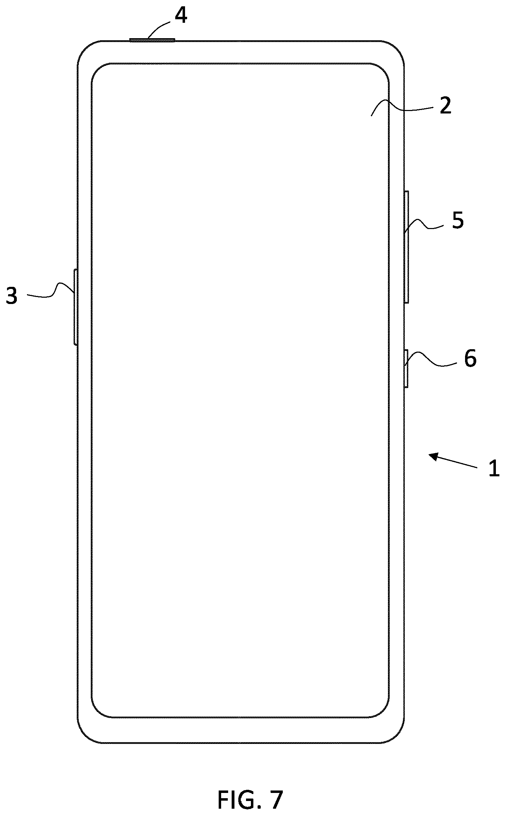

The invention concerns a protective frame 10 for a cellular phone 1 with a push-to-talk functionality. Figures 1 to 6 show different views of a protective frame 10 according to an embodiment of the invention and figure 7 shows a simplified view of a cellular phone 1, for which the protective frame 10 of figures 1 to 6 is configured.

The protective frame 10 according to the invention is configured for use with a cellular phone 1 that comprises at least one push-button that can be used as a push-to-talk button when the phone 1 is used in a Push-to-Talk over Cellular (PoC) system. The phone 1 can be a customary smart phone. The phone 1 can be configured to operate in any telecommunication network. The phone 1 could be configured to be operated in a telecommunication network dedicated for use by public authorities. An example of such a telecommunication network is VIRVE, which is used in Finland by public authorities, such as the police and the fire and rescue service. However, the phone 1 could also be configured to be operated in any other telecommunication network allowing push-to-talk functionality.

Said push-button that can be used as a push-to-talk button is arranged on the perimeter of the phone 1, preferably on one of the long sides of the perimeter of the phone 1. Preferably, said push-button is arranged on the left-hand side of the phone 1 to allow convenient use by a right-handed user.

In the example of figure 7, the phone 1 comprises a display 2 arranged on the front surface of the phone 1. The display 2 is a touch display. A first push-button 3 is arranged on the perimeter of the phone 1 on the left-hand side of the phone 1, seen from the front side of the phone 1. The first push-button 3 protrudes outwards from the perimeter of the phone 1 in a direction that is parallel to the plane of the display 2. The first push-button 3 can be a push-button that is dedicated for use as a push-to-talk button. Alternatively, the first push-button 3 can be a programmable push-button that can be configured to be used as a push-to-talk button, but could also be used for other purposes.

In the example of figure 7, the phone 1 further comprises a second push-button 4. The second push-button 4 can be an emergency call button, which allows making an emergency call. The second push-button 4 can be dedicated for use as an emergency call button, or the second push-button 4 can be a programmable push-button 4, which can be configured for different purposes. The second push-button 4 is arranged on the perimeter of the phone 1 on the top side. Also the second push-button 4 protrudes outwards from the perimeter of the phone 1 in a direction that is parallel to the plane of the display 2.

The phone 1 further comprises a third push-button 5. The third push-button 5 is arranged on the perimeter of the phone 1 on the right-hand side of the phone 1. The third push-button 5 thus faces an opposite direction than the first push-button 3. In the example of figure 7, the third push-button 5 is a volume control push-button. The phone 1 further comprises a fourth push-button 6 arranged on the same side as the third push-button 5. The third and fourth push-buttons 5, 6 protrude outwards from the perimeter of the phone 1 in a similar way as the first push-button 3 and the second push-button 4.

In the example of figure 7, the first, second, third and fourth push-buttons 3, 4, 5, 6 are physical push-buttons having predetermined dimensions. Each of the push-buttons 3, 4, 5, 6 is configured to move in response to pushing of the push-button with a sufficient force. Each of the push-buttons 3, 4, 5, 6 is configured to be pushed in a direction that is parallel to the plane of the display 2 of the phone 1. The phone 1 can comprise even further push-buttons. The phone 1 does not need to comprise all the push-buttons 3, 4, 5, 6 mentioned above, but the protective frame 10 according to the invention can be used with a phone 1 comprising at least the first push-button 3.

The protective frame 10 is made of an elastic material. Suitable materials for the protective frame 10 are, for instance, different polyamides or other plastic materials. The protective frame 10 can be made, for instance, by injection molding or 3D-printing. In the embodiment of the figures, the protective frame 10 is made of two parts that are attached to each other by snap-fasteners. One of the parts forms the back side of the protective frame 10 and one of the parts forms the front side of the protective frame 10. This allows easy mounting of the protective frame 10. However, the protective frame 10 could also be made as a single piece, or it could be made from more than two parts. The parts could be attached to each other also by other means than snap-fasteners.

The protective frame 10 has a perimeter that is configured to surround the perimeter of the phone 1. In the embodiment of the figures, the protective frame 10 is configured to extend to the front and back surfaces of the phone 1. However, the protective frame leaves the display 2 of the phone 1 free. Alternatively, the protective frame 10 could comprise a display cover, which is configured to cover the display 2, but preferably allows use of the touch display 2. The display cover could be made of a different material than the rest of the protective frame 10. The display cover could be made of, for instance, tempered glass or hydrogel. In the embodiment of the figures, the protective frame 10 leaves also a major part of the back surface of the phone 1 free. However, the protective frame 10 could also be configured to cover the whole back surface, or a major part of the back surface. For instance, the protective frame 10 could leave a possible camera and flashlight on the back surface of the phone 1 free but cover otherwise the whole back surface of the phone 1.

The perimeter of the frame 10 is provided with a first push area 13. In a mounted state of the frame 10, the first push area 13 covers the first push-button 3 such that the use of the first push-button 3 is allowed. The user of the phone 1 can thus push the first push-area 13, and the movement of the first push area 13 is transmitted to the first push-button 3 of the phone 1. The first push area 13 is dimensioned to facilitate the use of the first push-button 3 of the phone 1.

The first push area 13 can be configured to make pushing of the first push-button easier and/or to reduce the risk of accidental pushing of the first push-button 3. This can be achieved by making at least one dimension of the push area 13 substantially greater than the respective dimension of the first push-button 3.

In the embodiment of the figures, in particular the length of the first push area 13 is significantly greater than the length of the first push-button 3. The length refers here to the direction that is parallel to the circumferential direction of the protective frame 10. The length of the first push area 13 is configured to be at least 50 percent, preferably at least 100 percent greater than the length of the first push-button 3. The first push area 13 can be configured to allow the use of the first push-button 3 using two fingers simultaneously. To allow that, the length of the first push area 13 should be at least 20 mm, preferably at least 30 mm. In the embodiment of the figures, the length of the first push area 13 is over 40 mm.

Also the width of the first push area 13 is greater than the width of the first push-button 3. The width refers here to the direction that is perpendicular to the plane of the front surface of the phone 1, i.e. the surface provided with the display 2. The width of the first push area 13 is configured to be at least 20 percent, preferably at least 50 percent greater than the width of the first push-button 3. The width of the first push area 13 is preferably at least 4.0 mm.

The area of the first push area 13 can be larger than the area of the first push-button 3 of the phone 1. The area of the first push area 13 could be, for instance, at least 80 percent greater than the area of the first push-button 3.

In addition to making the area of the first push area 13 larger than the area of the first push-button 3, or instead of that, the first push area 13 could be configured to rise from the surrounding area of the protective frame 10 more than the first push-button 3 rises from the perimeter of the phone 1. The first push area 13 can be configured to rise by at least 1.5 mm, preferably by at least 2.0 mm from the area surrounding the first push area 13. In the embodiment of the figures, the first push area 13 rises approximately 3 mm from the surrounding area of the protective frame 10. In the embodiment of the figures, the first push area 13 is surrounded by a first collar 21. The first collar 21 protrudes radially outwards from the surrounding area of the protective frame 10. The first push area 13 rises said at least 1.5 mm from the first collar 21.

To reduce the risk of accidentally pushing the first push-button 3 of the phone 1, the protective frame 10 is configured to increase the force needed for pushing the first push-button 3 by at least 1 **N,** preferably by at least 1.5 N. Compared to the force needed for pushing the first push-button 3 of the phone 1 without the protective frame 10, the force needed for pushing the first push-button 3 via the first push area 13 could be configured to be at least 50 percent greater.

The back side of the first push area 13, i.e. the side facing the perimeter of the phone 1, is provided with a knob 17 that is configured to contact the first push-button 3 of the phone 1 when the first push area 13 is pushed.

In the embodiment of the figures, the protective frame 10 comprises a second push area 14 that is configured to cover in the mounted state of the frame 10 the second push-button 4 and dimensioned to facilitate the use of the second push-button 4.

The second push area 14 can be configured in a similar way as the first push area 13. The second push area 14 can thus be made larger than the second push-button 4. The length of the second push area 14 can be made at least 20 percent, preferably at least 50 percent greater than the length of the second push-button 4. Alternatively, or in addition, the width of the second push area 14 can be made at least 20 percent, preferably at least 50 percent greater than the width of the second push-button 4. The length refers to the circumferential direction of the frame 10 and the width to the direction that is perpendicular to the plane of the front surface of the phone 1.

The use of the second push-button 14 can also be facilitated by raising the second push area 14 by at least 1.5 mm, preferably by at least 2.0 mm, from the area surrounding the second push area 14. The second push area 14 can be configured to rise from the surrounding area more than the second push-button 4 rises from the perimeter of the phone 1. In the embodiment of the figures, the second push area 14 is surrounded by a second collar 22. The second collar 22 protrudes radially outwards from the surrounding area of the protective frame 10. The second push area 14 rises said at least 1.5 mm from the second collar 22.

To reduce the risk of accidental pushing of the second push-button 4, the frame 10 can be configured to increase the force needed for pushing the second push-button 4 by at least 2 **N,** preferably by at least 3 N. Compared to the force needed for pushing the second push-button 4 of the phone 1 without the protective frame 10, the force needed for pushing the second push-button 4 via the second push area 14 could be configured to be at least 100 percent greater. The second push area 14 can thus be made stiffer than the first push area 13.

The back side of the second push area 14, i.e. the side facing the perimeter of the phone 1, is provided with a knob 18 that is configured to contact the second push-button 4 of the phone 1 when the second push area 14 is pushed.

In the embodiment of the figures, the frame 10 comprises a third push area 15 that covers in the mounted state of the frame 10 the third push-button 5. In the example of figure 7, the third push-button 5 is a volume control button and pushing of the one of the ends of the third push-button 5 is configured to increase the volume of the phone 1 and pushing of the other end is configured to decrease the volume of the phone 1. Therefore, the third push area 15 is divided into two sub-areas 15A, 15B, each covering one end of the third push-button 5.

The frame 10 is configured to surround the third push-button 5 such that the third push-button 5 and the third push-area 15 are recessed relative to the area of the frame 10 surrounding the third push-button 5 and the third push area 15. This reduces the risk of accidentally pushing the third push-button 5. The user of the phone 1 can thus hold the phone in hand such that the right-hand side of the frame 10 rests against the palm when the first push-button 3, i.e. the push-to-talk button is used. In the embodiment of the figures, the third push area 15 is surrounded by a third collar 23. The third collar 23 protrudes radially outwards from the surrounding area of the protective frame 10. The third push area 15 is preferably arranged at a level that is at least 0.5 mm below the outer surface of the third collar 23.

The back side of each of the sub-areas 15A, 15B of the third push area 15, i.e. the side facing the perimeter of the phone 1, is provided with a knob 19A, 19B that is configured to contact one end of the third push-button 5 of the phone 1 when the sub-area 15A, 15B is pushed.

In the example of figure 7, also the fourth push-button 6 is arranged on the right-hand side of the phone 1. The protective frame 10 comprises a fourth push-area 16 that is configured to cover the fourth push-button 6 and allow the use of the fourth push-button 6. The frame 10 is configured to surround the fourth push-button 6 and the fourth push area 16 in a similar way as the third push-button 5 and the third push area 15. The fourth push-button 6 and the fourth push-area 16 are thus recessed relative to the area of the frame 10 surrounding the fourth push-button 6 and the fourth push area 16. This reduces the risk of accidentally pushing the fourth push-button 6. In the embodiment of the figures, the third collar 23 surrounds also the fourth push area 16.

The back side of the fourth push area 16, i.e. the side facing the perimeter of the phone 1, is provided with a knob 20 that is configured to contact the fourth push-button 6 of the phone 1 when the fourth push area 16 is pushed.

It is not necessary to provide the protective frame 10 with the third and/or fourth push areas 15, 16, but the frame 10 could be provided with an opening that provides an access to the third and/or fourth push-buttons 5, 6. Alternatively, if some of the push-buttons 5, 6 is not needed during the PoC use of the phone 1, the protective frame 10 could cover the push-button 5, 6 such that the use of the push-button 5, 6 is not possible without removing the protective frame 10.

Desired stiffness for each push area 13, 14, 15, 16 can be achieved by suitable attachment to the surrounding parts of the protective frame 10. For instance, each push area 13, 14, 15, 16 can be connected to the area surrounding the push area 13, 14, 15, 16 from one side or from two opposite sides of the push area 13, 14, 15, 16. The area connecting the push area 13, 14, 15, 16 to the area surrounding the push area 13, 14, 15, 16 thus forms a hinge-like connection. By selecting a suitable length and/or thickness for each such connecting area, the stiffness of the push area 13, 14, 15, 16 can be adjusted.

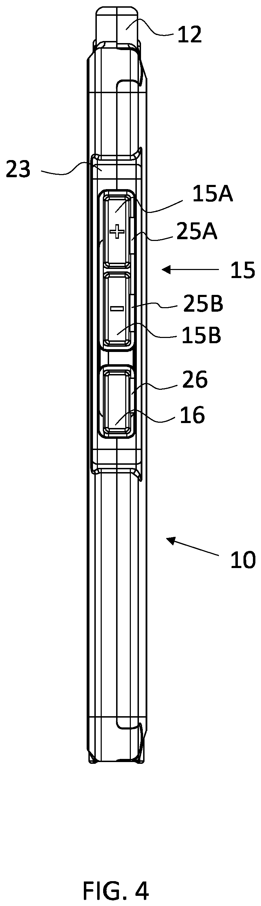

In the embodiment of the figures, each push area 13, 14, 15, 16 is connected to the surrounding area from one side only. Figure 2 shows the connecting area 24 of the second push area 14 and figure 4 shows the connecting areas 25A, 25B of the two sub-areas 15A, 15B of the third push area 15 and the connecting area 26 of the fourth push area 16. A similar connecting area connects the first push area 13 to the surrounding area of the protective frame 10. On other sides of the push areas 13, 14, 15, 16, there is a gap between the push areas 13, 14, 15, 16 and the surrounding area. In the embodiment of the figures, the connecting areas 24, 25A, 25B, 26 extend only over part of the length of the respective push area 13, 14, 15, 16.

In the embodiment of the figures, the frame 10 comprises a protrusion 12 protruding in the longitudinal direction of the frame 10 outwards from the top surface of the frame 10. The protrusion 12 is a dowel-shaped part resembling an antenna of a walkie-talkie. The protrusion thus allows the protective frame 10 to be secured to a casing by means of an attachment loop. This allows the phone 1 to be carried in a similar way as conventional walkie-talkies.

It will be appreciated by a person skilled in the art that the invention is not limited to the embodiments described above, but may vary within the scope of the appended claims. For instance, as the protective frame can be configured for different phones, the locations and dimensions of the various parts of the protective frame may differ from the embodiments of the figures.

## Claims

1. A protective frame (10) for a cellular phone (1) with a push-to-talk functionality, the perimeter of the cellular phone (1) being provided with a first push-button (3) that can be used as a push-to-talk button, the protective frame (10) being made of an elastic material and having a perimeter configured to surround the perimeter of the phone (1), wherein the perimeter of the frame (10) is provided with a first push area (13), the first push area (13) being configured to cover in a mounted state of the frame (10) the first push-button (3) of the phone (1) and to allow use of said first push-button (3), wherein the first push area (13) of the frame (10) is dimensioned to be larger than the area of the first push-button (3) of the phone (1) to facilitate the use of said first push-button (3) of the phone (1), **characterized in that** the length of the first push area (13) is at least 50 percent greater than the length of the first push-button (3), and the width of the first push area (13) is at least 20 percent greater than the width of the first push-button (3), and the frame (10) is configured to increase the force needed for pushing the first push-button (3) by at least 1 N.

2. A protective frame (10) according to claim 1, wherein the length of the first push area (13) is at least 100 percent greater than the length of the first push-button (3) and/or the width of the first push area (13) is at least 50 percent greater than the width of the first push-button (3).

3. A protective frame (10) according to claim 1 or 2, wherein the length of the first push area (13) is at least 20 mm.

4. A protective frame (10) according to any of the preceding claims, wherein the first push area (13) is raised by at least 1.5 mm from the area surrounding said first push area (13).

5. A protective frame (10) according to any of the preceding claims, wherein the frame (10) is configured to increase the force needed for pushing the first push-button (3) by at least 1.5 N.

6. A protective frame (10) according to any of the preceding claims, wherein the frame (10) is configured for a phone (1) comprising a second push button (4) that can be used as an emergency call button, and the frame (10) comprises a second push area (14) that is configured to cover in the mounted state of the frame (10) said second push-button (4) and dimensioned to be larger than the area of the second push-button (4) of the phone (1) to facilitate the use of said second push-button (4).

7. A protective frame (10) according to claim 6, wherein the length and/or width of the second push area (14) is at least 20 percent greater than the respective dimension of the second push-button (4).

8. A protective frame (10) according to claim 6 or 7, wherein the frame (10) is configured to increase the force needed for pushing the second push-button (4) by at least 2 N.

9. A protective frame (10) according to any of claims 6-8, wherein the second push area (14) is raised by at least 1.5 mm from the area surrounding said second push area (14).

10. A protective frame (10) according to any of the preceding claims, wherein the frame (10) is configured for a phone (1) comprising a third push button (5) facing an opposite direction than the first push-button (3), and the frame (10) is configured to surround the third push-button (5) such that the third push-button (5) and an optional third push-area (15) covering the third push-button (5) is recessed relative to the area of the frame (10) surrounding said third push-button (5) and the optional third push area (15).

11. A protective frame (10) according to any of the preceding claims, wherein at least one of the push areas (13, 14, 15, 16) of the frame (10) is connected to the area surrounding said push area (13, 14, 15, 16) from one side or from two opposite sides of said push area (13, 14, 15, 16).

12. A protective frame (10) according to any of the preceding claims, wherein the frame (10) comprises a protrusion (12) protruding in the longitudinal direction of the frame (10) outwards from the top surface of the frame (10) to allow the frame (10) to be secured to a casing by means of an attachment loop.

13. A protective frame (10) according to any of the preceding claims, wherein the frame (10) is made of a plastic material, such as polyamide.

14. The use of the protective frame (10) according to any of the preceding claims with a cellular phone (1) with a push-to-talk functionality.

## Patentansprüche

1. Schutzrahmen (10) für ein Mobiltelefon (1) mit einer Push-to-Talk-Funktionalität, wobei der Umfang des Mobiltelefons (1) eine erste Drucktaste (3) aufweist, die als Push-to-Talk-Taste verwendet werden kann, wobei der Schutzrahmen (10) aus einem elastischen Material hergestellt ist und einen Umfang aufweist, der konfiguriert ist, um den Umfang des Telefons (1) zu umgeben, wobei der Umfang des Rahmens (10) mit einem ersten Druckbereich (13) bereitgestellt ist, wobei der erste Druckbereich (13) konfiguriert ist, um in einem befestigten Zustand des Rahmens (10) die erste Drucktaste (3) des Telefons (1) abzudecken und die Benutzung der ersten Drucktaste (3) zu ermöglichen, wobei der erste Druckbereich (13) des Rahmens (10) größer dimensioniert ist als der Bereich der ersten Drucktaste (3) des Telefons (1), um die Benutzung der ersten Drucktaste (3) des Telefons (1) zu erleichtern, **dadurch gekennzeichnet, dass** die Länge des ersten Druckbereichs (13) mindestens 50 Prozent größer ist als die Länge der ersten Drucktaste (3), und die Breite des ersten Druckbereichs (13) mindestens 20 Prozent größer ist als die Breite der ersten Drucktaste (3), und der Rahmen (10) konfiguriert ist, um die zum Drücken der ersten Drucktaste (3) erforderliche Kraft um mindestens 1 N zu erhöhen.

2. Schutzrahmen (10) nach Anspruch 1, wobei die Länge des ersten Druckbereichs (13) mindestens 100 Prozent größer ist als die Länge der ersten Drucktaste (3) und/oder die Breite des ersten Druckbereichs (13) mindestens 50 Prozent größer ist als die Breite der ersten Drucktaste (3).

3. Schutzrahmen (10) nach Anspruch 1 oder 2, wobei die Länge des ersten Druckbereichs (13) mindestens 20 mm ist.

4. Schutzrahmen (10) nach einem der vorstehenden Ansprüche, wobei der erste Druckbereich (13) um mindestens 1,5 mm gegenüber dem den ersten Druckbereich (13) umgebenden Bereich erhaben ist.

5. Schutzrahmen (10) nach einem der vorstehenden Ansprüche, wobei der Rahmen (10) konfiguriert ist, um die zum Betätigen der ersten Drucktaste (3) erforderliche Kraft um mindestens 1,5 N zu erhöhen.

6. Schutzrahmen (10) nach einem der vorstehenden Ansprüche, wobei der Rahmen (10) für ein Telefon (1) konfiguriert ist, umfassend eine zweite Drucktaste (4), die als Notruftaste verwendet werden kann, und der Rahmen (10) einen zweiten Druckbereich (14) umfasst, der konfiguriert ist, um im befestigten Zustand des Rahmens (10) die zweite Drucktaste (4) abzudecken, und so dimensioniert ist, dass er größer ist als der Bereich der zweiten Drucktaste (4) des Telefons (1), um die Verwendung der zweiten Drucktaste (4) zu erleichtern.

7. Schutzrahmen (10) nach Anspruch 6, wobei die Länge und/oder Breite des zweiten Drucktastenbereichs (14) mindestens 20 Prozent größer ist als die jeweilige Abmessung der zweiten Drucktaste (4).

8. Schutzrahmen (10) nach Anspruch 6 oder 7, wobei der Rahmen (10) konfiguriert ist, um die für die Betätigung des zweiten Druckknopfes (4) erforderliche Kraft um mindestens 2 N zu erhöhen.

9. Schutzrahmen (10) nach einem der Ansprüche 6 bis 8, wobei der zweite Druckbereich (14) um mindestens 1,5 mm gegenüber dem Bereich, der den zweiten Druckbereich (14) umgibt, erhaben ist.

10. Schutzrahmen (10) nach einem der vorstehenden Ansprüche, wobei der Rahmen (10) für ein Telefon (1) konfiguriert ist, das eine dritte Drucktaste (5) umfasst, die in eine andere Richtung als die erste Drucktaste (3) weist, und der Rahmen (10) konfiguriert ist, um die dritte Drucktaste (5) so zu umgeben, dass die dritte Drucktaste (5) und ein optionaler dritter Druckbereich (15), der die dritte Drucktaste (5) abdeckt, relativ zu dem Bereich des Rahmens (10), der die dritte Drucktaste (5) und den optionalen dritten Druckbereich (15) umgibt, vertieft ist.

11. Schutzrahmen (10) nach einem der vorstehenden Ansprüche, wobei mindestens einer der Druckbereiche (13, 14, 15, 16) des Rahmens (10) mit dem den Druckbereich (13, 14, 15, 16) umgebenden Bereich von einer Seite oder von zwei gegenüberliegenden Seiten des Druckbereichs (13, 14, 15, 16) verbunden ist.

12. Schutzrahmen (10) nach einem der vorstehenden Ansprüche, wobei der Rahmen (10) einen Vorsprung (12) umfasst, der in Längsrichtung des Rahmens (10) von der oberen Oberfläche des Rahmens (10) nach außen ragt, damit der Rahmen (10) mittels einer Befestigungsschlaufe an einem Gehäuse befestigt werden kann.

13. Schutzrahmen (10) nach einem der vorstehenden Ansprüche, wobei der Rahmen (10) aus einem Kunststoffmaterial, wie beispielsweise Polyamid, hergestellt ist.

14. Verwendung des Schutzrahmens (10) nach einem der vorstehenden Ansprüche mit einem Mobiltelefon (1) mit Push-to-Talk-Funktionalität.

## Revendications

1. Cadre de protection (10) pour téléphone cellulaire (1) avec une fonctionnalité de messagerie vocale instantanée, le paramètre du téléphone cellulaire (1) est muni d'un premier bouton-poussoir (3) servant de bouton de messagerie vocale instantanée, le cadre de protection (10) est réalisé en matériau élastique et ayant un paramètre configuré pour entourer le paramètre du téléphone cellulaire (1), dans lequel le paramètre du cadre (10) est fourni avec une première zone de pression (13) la première zone de pression (13) étant configurée pour recouvrir, dans un état monté du cadre (10), le premier bouton-poussoir (3) du téléphone (1) et permet l'utilisation dudit bouton-poussoir (3), dans lequel la première zone de pression (13) du cadre (10) est dimensionnée de manière à être plus grande que la zone du bouton-poussoir (3) du téléphone (1), afin de faciliter l'utilisation dudit premier bouton-poussoir (3) du téléphone (1), **caractérisée en ce que** la longueur de la zone de pression (13) est au moins 50 % supérieure que la longueur du premier bouton-poussoir (3), et la largeur de la première zone de pression (13) est au moins 20 % supérieure à la largeur du premier bouton-poussoir (3), et le cadre (10) est configuré pour augmenter la force nécessaire pour pousser le premier bouton-poussoir (3) d'au moins 1 N.

2. Cadre de protection (10) selon la revendication 1, dans lequel la longueur de la première zone de pression (13) est au moins 100 % supérieure à la longueur du premier bouton-poussoir (3) et/ou la largeur de la première zone de pression (13) est au moins 50 % supérieure à la largeur du premier bouton-poussoir (3).

3. Cadre de protection (10) selon la revendication 1 ou 2, dans lequel la longueur de la première zone de pression (13) est d'au moins 20 mm.

4. Cadre de protection (10) selon l'une quelconque des revendications précédentes, dans lequel la première zone de pression (13) est surélevée d'au moins 1,5 mm par rapport à la zone entourant ladite première zone de pression (13).

5. Cadre de protection (10) selon l'une quelconque des revendications précédentes, dans lequel le cadre (10) est configuré pour augmenter la force nécessaire pour appuyer sur le premier bouton-poussoir (3) d'au moins 1,5 N.

6. Cadre de protection (10) selon l'une quelconque des revendications précédentes, dans lequel le cadre (10) est configuré pour un téléphone (1) comprenant un deuxième bouton-poussoir (4) pouvant être utilisé comme bouton d'appel d'urgence, et le cadre (10) comprend une deuxième zone de pression (14) configurée pour recouvrir, dans l'état monté du cadre (10), ledit deuxième bouton-poussoir (4) et dimensionnée pour être plus grande que la zone du deuxième bouton-poussoir (4) du téléphone (1) afin de faciliter l'utilisation dudit deuxième bouton-poussoir (4).

7. Cadre de protection (10) selon la revendication 6, dans lequel la longueur et/ou la largeur de la deuxième zone de pression (14) est au moins 20 % supérieure à la dimension respective du deuxième bouton-poussoir (4).

8. Cadre de protection (10) selon la revendication 6 ou 7, dans lequel le cadre (10) est configuré pour augmenter la force nécessaire pour appuyer sur le deuxième bouton-poussoir (4) d'au moins 2 N.

9. Cadre de protection (10) selon l'une quelconque des revendications 6 à 8, dans lequel la deuxième zone de pression (14) est surélevée d'au moins 1,5 mm par rapport à la zone entourant ladite deuxième zone de pression (14).

10. Cadre de protection (10) selon l'une quelconque des revendications précédentes, dans lequel le cadre (10) est configuré pour un téléphone (1) comprenant un troisième bouton-poussoir (5) orienté dans une direction opposée à celle du premier bouton-poussoir (3), et le cadre (10) est configuré pour entourer le troisième bouton-poussoir (5) de telle sorte que le troisième bouton-poussoir (5) et une troisième zone de pression optionnelle (15) recouvrant le troisième bouton-poussoir (5) soient en retrait par rapport à la zone du cadre (10) entourant ledit troisième bouton-poussoir (5) et la troisième zone de pression optionnelle (15).

11. Cadre de protection (10) selon l'une quelconque des revendications précédentes, dans lequel au moins une des zones de pression (13, 14, 15, 16) du cadre (10) est reliée à la zone entourant ladite zone de pression (13, 14, 15, 16) d'un côté ou de deux côtés opposés de ladite zone de pression (13, 14, 15, 16).

12. Cadre de protection (10) selon l'une quelconque des revendications précédentes, dans lequel le cadre (10) comprend une protubérance (12) faisant saillie dans la direction longitudinale du cadre (10) vers l'extérieur de la surface supérieure du cadre (10) pour permettre au cadre (10) d'être fixé à un boîtier au moyen d'une boucle de fixation.

13. Cadre de protection (10) selon l'une quelconque des revendications précédentes, dans lequel le cadre (10) est fait d'une matière plastique, tel que le polyamide.

14. Utilisation du cadre de protection (10) selon l'une quelconque des revendications précédentes avec un téléphone cellulaire (1) avec une fonctionnalité de messagerie vocale instantanée
